# EUROPEAN PATENT APPLICATION

(11) **EP 2 535 918 A2**
(43) Date of publication of application: **19.12.2012**
(21) Application number: 12160345.0
(22) Date of filing: 20.03.2012
(51) Int. Cl.: H01J 29/94, H01J 31/12

(54) **Field emission panel having posts provided in getter room**

(30) Priority: 17.06.2011 KR 20110059176
(71) Applicant: Samsung Electronics Co., Ltd., Suwon-si, Gyeonggi-do, 443-742 (KR)
(72) Inventor: Chang, Dong-su, Chungcheongnam-do (KR); Seo, In-ho, Gyeonggi-do (KR); Choo, Seong-hun, Gyeonggi-do (KR); Lee, Jae-young, Seoul (KR)
(74) Representative: D'Halleweyn, Nele Veerle Trees Gertrudis

(57) **Abstract**

A field emission panel, and a liquid crystal display and a field emission display using the same are provided. The field emission panel (100) includes an upper plate (110) including a first glass plate and a phosphor layer formed on the first glass plate; a lower plate (120) including a second glass plate disposed parallel to the first glass plate and a plurality of electron emission elements provided on the second glass plate; a plurality of spacers (160) disposed between the upper plate and the lower plate; a third glass plate (140) disposed on a rear of the lower plate to form a getter room (R); and at least one post (170) disposed in the getter room to support the lower plate and the third glass plate.

## Description

Apparatuses and methods consistent with exemplary embodiments relate to a field emission panel, and a liquid crystal display and a field emission display having the same. More particularly, exemplary embodiments relate to a field emission panel having at least one post provided in a getter room, and a liquid crystal display and a field emission display having the same.

In general, a field emission material is an element, which emits electrons when an electric field is formed therearound in a vacuum atmosphere, and as a typical example thereof, a carbon nano-tube (CNT) is known. A panel, which produces light, can be manufactured by using such a field emission element. Such a panel can be applied to a backlight unit of a liquid crystal display (LCD), a panel for image realization of a field emission display (FED) or the like. Hereinafter, this type of panels will be referred to a field emission panel.

The field emission panel includes an upper plate and a lower plate, which are disposed parallel to each other. The lower plate is provided with electron emission elements formed of the field emission material (for example, the CNT), and the upper plate is provided with a phosphor layer, which generates the light by a collision with the electrons.

A space between the upper plate and the lower plate of the field emission panel should be maintained in a vacuum state. To maintain the space between the upper plate and the lower plate of the field emission panel in the vacuum state, a space so-called 'getter room' can be provided on the rear of the lower plate. The getter room is formed to communicate with the space between the upper plate and the lower plate. A plurality of getters made of a substance, such as barium (Ba), is disposed in the getter room, and absorbs gases, such as a hydrogen, an oxygen, a hydro carbon and so on, which can be generated in the field emission panel.

Generally, the getter room is formed by the lower plate and an additional glass plate disposed on the rear of the lower plate. Since the getter room is maintained in a vacuum state or a state close thereto, the glass plate, which forms the getter room, comes under quite a high pressure due to ambient air.

Accordingly, the glass plate, which forms the getter room, may be deformed or damaged by the outer pressure, and such a situation can damage the field emission panel.

Exemplary embodiments overcome the above disadvantages and other disadvantages not described above. Also, the exemplary embodiments are not required to overcome the disadvantages described above, and an exemplary embodiment may not overcome any of the problems described above.

One or more exemplary embodiments prevent a glass plate, which forms a getter room of a field emission panel, from being deformed and/or damaged.

According to an aspect of an exemplary embodiment, there is provided a field emission panel including an upper plate including a first glass plate and a phosphor layer formed on the first glass plate; a lower plate including a second glass plate disposed parallel to the first glass plate and a plurality of electron emission elements provided on the second glass plate; a plurality of spacers disposed between the upper plate and the lower plate; a third glass plate disposed on a rear of the lower plate to form a getter room; and at least one post disposed in the getter room to support the lower plate and the third glass plate.

The post may be disposed to be aligned in a vertical direction with at least one of the spacers.

A distance in a horizontal direction between the post and a spacer facing the post may be within 5 mm.

The post may have a thickness larger than that of the spacers.

The post may have a column shape, and be disposed to face one spacer with the lower plate interposed therebetween.

The post may have a bar shape, and be disposed to face more than two spacers while with the lower plate interposed therebetween.

The plurality of spacers may be disposed to form a plurality of rows, and each post may be extended along one of the plurality of rows.

A lower surface of the post may be adhered on an upper surface of the third glass plate, and an upper surface of the post may come in contact with a bottom surface of the lower plate.

The field emission panel may further include a sealing member disposed between the lower plate and the third glass plate to seal the getter room.

The sealing member may be disposed to be aligned in a vertical direction with at least one of the spacers.

A separation distance in a horizontal direction between the sealing member and a spacer facing the post may be within 5 mm.

The electron emission elements may be made of a carbon nano-tube.

According to an aspect of another embodiment, there is provided a liquid crystal display including a field emission panel as disclosed above; a liquid crystal panel to convert a white light generated from the field emission panel into a color image; and a housing to accommodate the field emission panel and the liquid crystal panel.

According to an aspect of another embodiment, there is provided a field emission display including a field emission panel as disclosed above; and a housing to accommodate the field emission panel.

### BRIEF DESCRIPTION OF THE DRAWINGS

The above and/or other aspects will become more apparent by describing certain exemplary embodiments with reference to the accompanying drawings, in which:

FIG. 1 is a schematic cross-sectional view showing a field emission panel according to an exemplary embodiment;

FIG. 2 is a magnified cross-sectional view showing an area A of FIG. 1;

FIG. 3 is a magnified cross-sectional view showing an area B of FIG. 1;

FIGS. 4A and 4B are cross-sectional views taken along line IV-IV of FIG. 3;

FIG. 5 is a view for explaining a separation distance in a horizontal direction between spacers and posts of the field emission panel;

FIG. 6 is a view showing a field emission panel according to another embodiment;

FIG. 7 is a schematic cross-sectional view showing a liquid crystal display according to another embodiment; and

FIG. 8 is a schematic cross-sectional view showing a field emission display according to another embodiment.

### DETAILED DESCRIPTION OF EXEMPLARY EMBODIMENTS

Various embodiments are described in greater detail below with reference to the accompanying drawings.

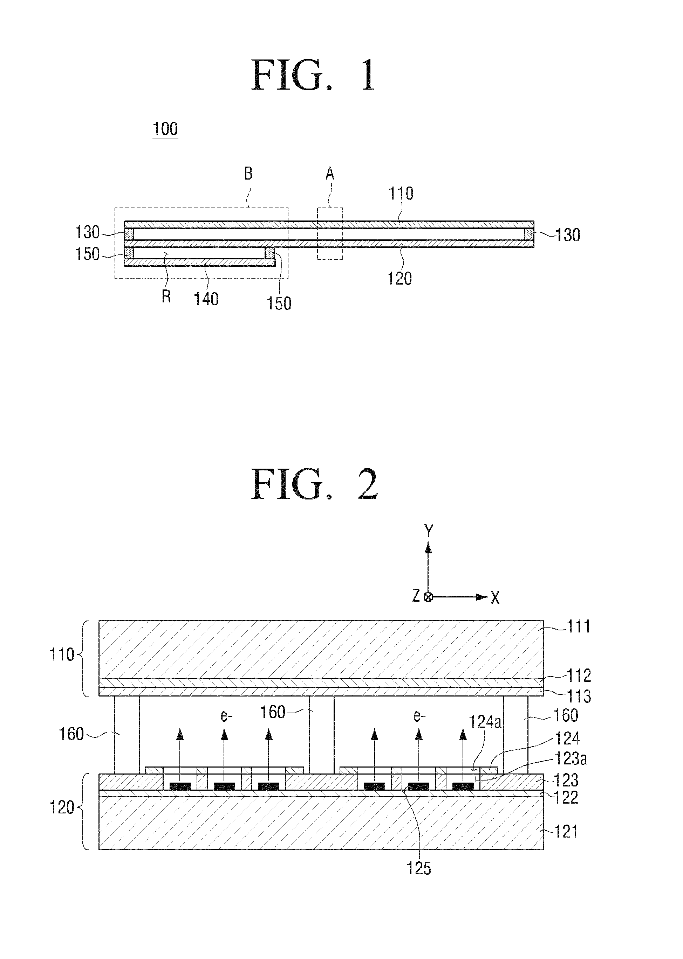

FIG. 1 is a schematic cross-sectional view showing a field emission panel according to an embodiment, and FIG. 2 is a magnified cross-sectional view showing an area A of FIG. 1.

Referring to FIGS. 1 and 2, the field emission panel 100 includes an upper plate 110 and a lower plate 120.

The upper plate 110 includes a first glass plate 111, an anode electrode 112, and a phosphor layer 113.

The first glass plate 111 is made of a glass material having a light penetrability, and formed in the form of a rectangular plate. On an inner surface of the first glass plate 111 are successively deposited the anode electrode 112 and the phosphor layer 113. An electric field is formed between the anode electrode 112 and gate electrodes 124 to be later described, and electrons from which electron emission elements 125 emit can be accelerated toward the upper plate 110 by the electric field. As the accelerated electrons hit the phosphor layer 113, light is generated from the phosphor layer 113.

The lower plate 120 includes a second glass plate 121, cathode electrodes 122, an insulating layer 123, gate electrodes 124, and electron emission elements 125.

The second glass plate 121 is disposed parallel to the first glass plate 111 while being spaced a distance away therefrom. Like the first glass plate 111, the second glass plate 121 is made of a glass material having a light penetrability, and formed in the form of a rectangular plate. On the second glass plate 121 are successively disposed the cathode electrodes 122 and the insulating layer 123. A plurality of accommodating grooves 123a for accommodating the electron emission elements 125 are formed in the insulating layer 123. A plurality of gate electrodes 124 are disposed on the insulating layer 123, and thru holes 124a for electron emission are provided in the gate electrodes 124.

The electron emission elements 125 are made of a material so-called 'field emission material', which emits electrons when the electric field is formed therearound. In the embodiment, the electron emission elements 125 are made of a carbon nano-tube (CNT). Alternatively, the electron emission elements 125 may be made of other field emission material, such as a graphite, a graphite nano-fiber, a diamond, a diamond-like carbon (DLC), a fullerene, and a silicon nano-fiber.

The electron emission elements 125 emit the electrons by virtue of the electric field, which are formed between the cathode electrodes 122 and the gate electrodes 124. The emitted electrons can be accelerated toward the upper plate 110 by the electric field, which is formed between the gate electrodes 124 and the anode electrode 112. At this time, the electrons pass the gate electrodes 124 through the thru holes 124a.

The field emission panel 100 further includes a first sealing member 130 and a plurality of spacers 160. Referring to FIG. 1, the first sealing member 130 is of a glass material, and has a rectangular annular shape. The first sealing member 130 is disposed between the upper plate 110 and the lower plate 120, and adhered to the upper plate 110 and the lower plate 120 by a seal frit (not shown) to seal a space between the upper plate 110 and the lower plate 120.

Referring to FIG. 2, the spacers 160 have a column shape, and are disposed to form a plurality of rows in X and Z directions. The spacers 160 support the upper plate 110 and the lower plate 120, thereby preventing the upper plate 110 and the lower plate 120 from being deformed due to an outer pressure.

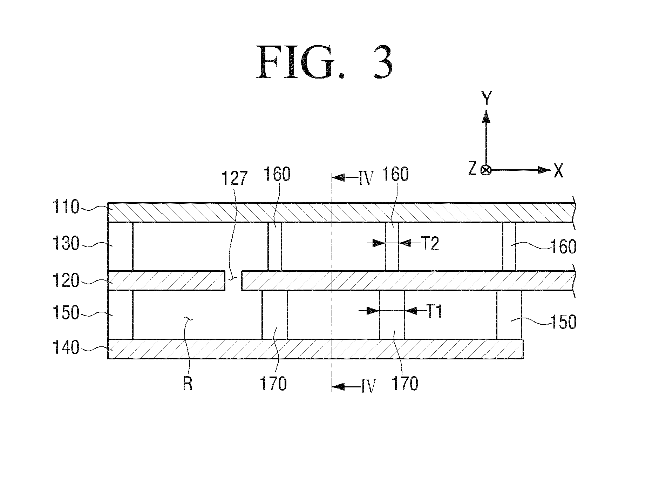

The field emission panel 100 has a getter room R provided on the rear of the lower plate 120. The getter room R communicates with the space between the upper plate 110 and the lower plate 120 through a connecting hole 127 (see FIG. 3) formed in the lower plate 120. In addition, a plurality of getters (not shown), for example, which may be mounted on an inner surface of a third glass plate 140 (see FIG. 3), are provided in the getter room R. The getters are made of a material (for example, Ba), which absorbs gases, such as a hydrogen, an oxygen, a hydrocarbon and so on. The gasses, which are generated in the manufacture or use of the field emission panel 100, can be absorbed by the getters in the getter room R, thereby allowing an inner space of the field emission panel 100 to be maintained in a vacuum state or a state close thereto.

To form the getter room R, the field emission panel 100 further includes a third glass plate 140 and a second sealing member 150. The third glass plate 140 has a rectangular plate shape having an area smaller than that of the upper plate 110 and the lower plate 120, and is disposed parallel to the lower plate 120 on the rear thereof. The second sealing member 150 has a rectangular annular shape, and is disposed to surround the getter room R between the lower plate 120 and the third glass plate 140. The second sealing member 150 is adhered to the lower plate 120 and the third glass plate 140 by a seal frit (not shown) to seal the getter room R from ambient air.

Since the getter room R is maintained in the vacuum state or the state close thereto, the third glass plate 140, which forms the getter room R, comes under quite high outer pressure. Accordingly, it is necessary to prevent the third glass plate 140 from being deformed and/or damaged due to such an outer pressure. This will be explained with reference to FIGS. 3 to 5.

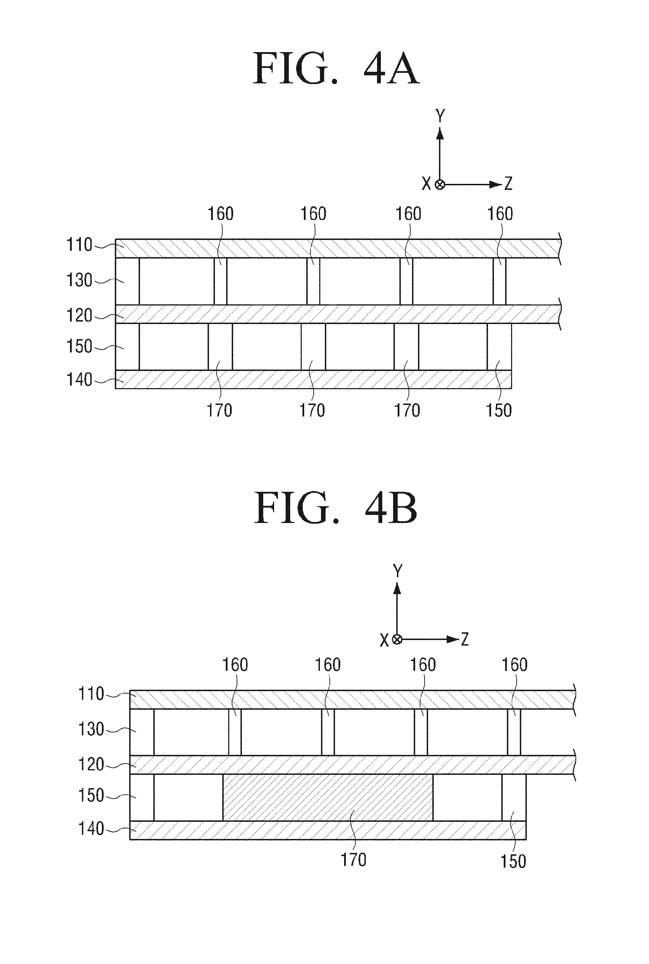

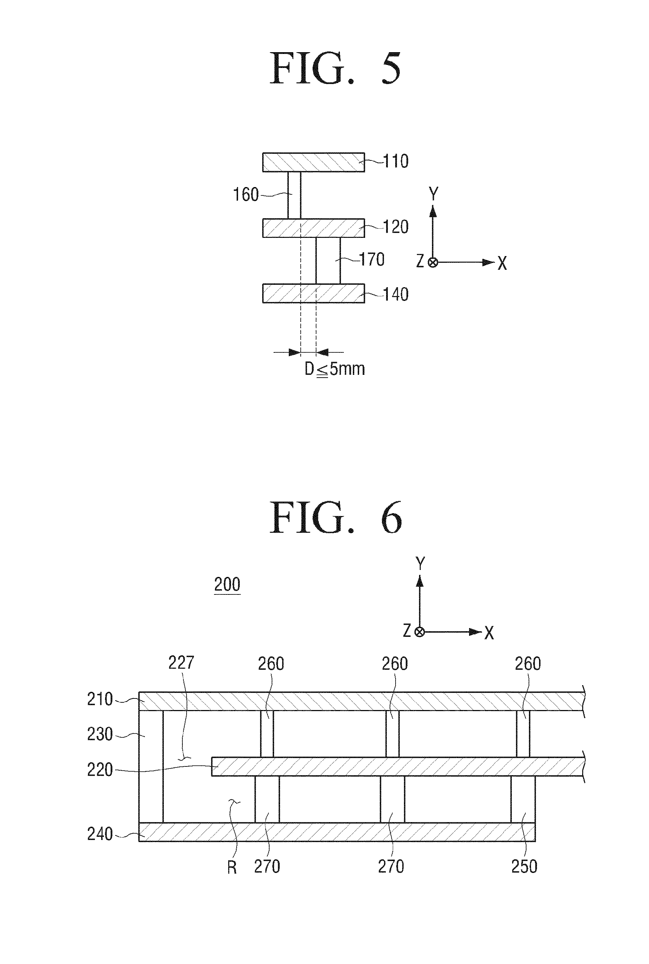

FIG. 3 is a magnified cross-sectional view showing an area B of FIG. 1, FIGS. 4A and 4B are cross-sectional views taken along line IV-IV of FIG. 3, and FIG. 5 is a view for explaining a distance in a horizontal direction between the spacers and the posts of the field emission panel.

Referring to FIG. 3, a plurality of posts 170 are provided in the getter room R. The posts 170 are disposed to come in contact with a bottom surface of the lower plate 120 and an upper surface of the third glass plate 140, and adhered with the third glass plate 140 by a seal frit (not shown).

In one exemplary embodiment, the posts 170 may have a column shape. In this case, as shown in FIG. 4A, each of the posts 170 in a Z direction is disposed to face one spacer 160 and are separated by the lower plate 120 interposed therebetween. In another embodiment, the posts 170 may have a bar shape. In this case, as shown in FIG. 4B, each of the posts 170 in the Z direction is disposed to face plural spacers 160, and extend along a row into which the corresponding spacers 160 are formed.

Since such posts 170 support the third glass plate 140, the deformation and/or damage of the third glass plate 140 by the outer pressure can be prevented. Accordingly, the field emission panel not only reduces a thickness of the third glass plate 140, but also easily extends the getter room R, as compared with the conventional field emission panel.

The posts 170 may be disposed, so that they are aligned in a vertical direction, that is, in a Y direction, with the spacers 160. Since the posts 170 are aligned with the spacers 160, a deformation of the lower plate 120 due to a pressure can be minimized. For instance, if the posts 170 are not aligned with the spacers 160, the lower plate 120 is more likely to be deformed by bending.

Further, even if the posts 170 are not correctly aligned with the spacers 160, a separation distance in a horizontal direction (that is, an X direction) between the posts 170 and the spacers 160 is configured to be as small as possible. In other words, as shown in FIG. 5, the separation distance in the horizontal direction D between the posts 170 disposed on the third glass plate 140 and the spacers 160 disposed on the lower glass plate 120 is preferably, but not necessarily, within 5 mm.

Also, to minimize an alignment deviation between the posts 170 and the spacers 160 due to an assembling tolerance of the field emission panel 100, a thickness T1 of the posts 170 is preferably, but not necessarily, larger than a thickness T2 of the spacers 160.

On the other hand, since the sealing members 150, which form the getter room R, apply pressure to the lower plate 120, one of the sealing members 150, such as a second sealing member 150 may be aligned with the spacers 160 to prevent the deformation of the lower plate 120, and a separation distance in horizontal direction between the second sealing member 150 and the spacer 160 facing thereto maybe within 5 mm.

FIG. 6 as a view similar to FIG. 3 showing a field emission panel according to another exemplary embodiment.

The field emission panel 200 illustrated in FIG. 6 has a structure almost similar with that of the field emission panel 100 illustrated in FIG. 3. Accordingly, when explaining the field emission panel 200, the same components and features as those of the field emission panel 100 will not be described, but only the differences therebetween.

Referring to FIG. 6, in the field emission panel 200, a first sealing member 230 extends from a third glass plate 240 which forms a getter room R to an upper plate 210. And a lower plate 220 is formed a little smaller than the upper plate 210, so that a connection hole 227 is formed between the first sealing member 230 and the lower plate 220.

Like the field emission panel 100, the field emission panel 200 is also configured, so that a plurality of posts 270 provided in the getter room R are aligned in a vertical direction with spacers 260 facing thereto. Further, a second sealing member 250, which forms the getter room R, is also aligned in a vertical direction with spacers 260 facing thereto.

With the posts 270, a deformation and/or damage of the third glass plate 240 can be prevented, and due to the aligning arrangement of the posts 270 and the second sealing member 250 to the spacers 260, a deformation or damage of the lower plate 220 can be prevented.

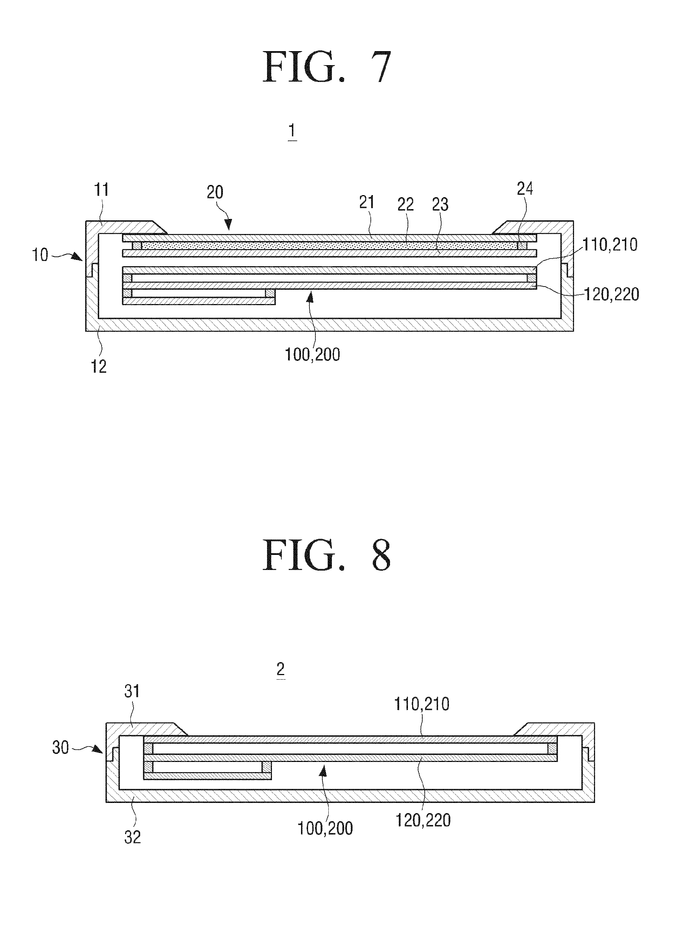

FIG. 7 is a schematic cross-sectional view showing a liquid crystal display 1 according to an exemplary embodiment.

Referring to FIG. 7, the liquid crystal display 1 includes a housing 10, a liquid crystal panel 20, and a field emission panel 100 or 200 according to the embodiments as described above.

The housing 10 accommodates inner components of the display 1 including the liquid crystal panel 20 and the field emission panel 100 or 200.

The liquid crystal panel 20 is provided with a color filter substrate 21 in which a color filter layer (not shown) is formed and a thin film transistor substrate 23 in which thin film transistors are formed, and a liquid crystal layer 22 is filled between the color filter substrate 21 and the thin film transistor substrate 23. The color filter substrate 21 and the thin film transistor substrate 23 are sealed and combined by a sealant 24.

The field emission panel 100 or 200 is disposed on a rear surface of the liquid crystal panel 20, and produces a white light emitted toward the liquid crystal panel 20. Here, it can be appreciated that the field emission panel 100 or 200 is used as a backlight unit. The white light emitted toward the liquid crystal panel 20 can be converted into a color image by the color filter substrate 21 after a penetration amount thereof is adjusted while passing through the liquid crystal layer 22.

FIG. 8 is a schematic cross-sectional view showing a field emission display 2 according to an exemplary embodiment.

Referring to FIG. 8, the field emission display 2 includes a housing 30 and a field emission panel 100 or 200 according to the exemplary embodiments as described above.

The housing 30 accommodates inner components of the display 2 including the field emission panel 100 or 200. The housing 30 includes a front housing 31 and a rear housing 32.

The field emission panel 100 or 200 is used as a display panel, which realizes a color image for itself without any aid of the backlight unit. Accordingly, a phosphor layer formed on an upper plate 110 or 210 of the field emission panel 100 or 200 is made up of many phosphors, which are arranged in a pattern corresponding to a pattern of pixels to realize the color image.

As described above, although various exemplary embodiments have been explained, the inventive concept is not limited to the foregoing exemplary embodiments. Additionally, the inventive concept can be readily applied to other types of apparatuses and many alternatives, modifications, and variations will be apparent to those skilled in the art. Thus, the scope of the inventive concept is not to be construed as being limited to the description of the exemplary embodiments, and is to be construed by the attached claims and equivalents.

## Claims

1. A field emission panel (100, 200), comprising:
an upper plate (110, 210) comprising a first glass plate (111) and a phosphor layer disposed on the first glass plate;
a lower plate (120, 220) comprising a second glass plate (121) disposed
parallel to the first glass plate, and a plurality of electron emission elements (125) disposed on the second glass plate, the upper plate being disposed on a first side of the lower plate;
a plurality of spacers (160, 260) disposed between the upper plate and the lower plate;
a third glass plate (140, 240) disposed on a second side of the lower plate opposite to the first side to form a getter room (R) between the lower plate and the third glass plate; and
at least one post (170, 270) disposed in the getter room (R) to support the lower plate and the third glass plate.

2. The panel of claim 1, wherein the post (170, 270) is aligned in a vertical direction with at least one of the spacers (160, 260).

3. The panel of any one of the previous claims, wherein a separation distance in a horizontal direction between the post (170, 270) and a spacer facing (160, 260) the post is less than or equal to 5 mm.

4. The panel of any one of the previous claims, wherein a thickness of the post (170, 270) is larger than a thickness of at least one of the spacers (160, 260).

5. The panel of any one of the previous claims, wherein the post (170, 270) has a column shape, and faces one spacer (160, 260) and the lower plate (120, 220) is interposed between the post (170, 270) and the spacer (160, 260).

6. The panel of any one of the previous claims, wherein the post (170, 270) has a bar shape, and faces more than two spacers (160, 260) and the lower plate (120, 220) is interposed between the post and the spacers.

7. The panel of claim 6, wherein the plurality of spacers (160, 260) are disposed in a plurality of rows, and each post (170, 270) is extended along one of the plurality of rows.

8. The panel of any one of the previous claims, wherein a lower surface of the post (170, 270) is adhered on an upper surface of the third glass plate (140, 240), and an upper surface of the post comes in contact with a bottom surface of the lower plate.

9. The panel of any one of the previous claims, further comprising:
a sealing member (150, 250) disposed between the lower plate (120, 220) and
the third glass plate (140, 240) to seal the getter room (R).

10. The panel of claim 9, wherein the sealing member (150, 250) is disposed to be aligned in a vertical direction with at least one of the spacers (160,260).

11. The panel of claim 9, wherein a separation distance in a horizontal direction between the sealing member and a spacer facing the post is less than or equal to 5 mm.

12. The panel of any one of the previous claims, wherein the electron emission elements (125) are made of a carbon nano-tube.

13. A liquid crystal display (1), comprising:
a field emission panel (100, 200) according to any of claims 1 to 12;
a liquid crystal panel (20) configured to convert a white light generated from the field emission panel into a color image; and
a housing (10) that accommodates the field emission panel and the liquid crystal panel.

14. A field emission display (2), comprising:
a field emission panel (100, 200) according to any of claims 1 to 12 to form a color image; and
a housing (30) to accommodate the field emission panel.
